# EUROPEAN PATENT SPECIFICATION

(11) **EP 4 657 300 B1**
(45) Date of publication and mention of the grant of the patent: **09.12.2026**
(21) Application number: 24305856.7
(22) Date of filing: 30.05.2024
(51) Int. Cl.: G06F 21/79, G06F 1/30

(54) **DEVICE AND METHOD FOR TIME PROGRAMMABLE MEASUREMENT OF OVERHEAD POWER OFF SYSTEM**
GERÄT UND VERFAHREN ZUR DURCHFÜHRUNG EINER ZEIT-PROGRAMMIERBAREN STEUERUNG UND SENSITIVEN INFORMATIONSERFASSUNG
DISPOSITIF ET PROCÉDÉ D'EFFACEMENT PROGRAMMABLE DANS LE TEMPS D'INFORMATIONS SENSIBLES APRÈS ARRÊT DU SYSTÈME

(43) Date of publication of application: 03.12.2025
(73) Proprietor: Safran Data Systems GmbH, 51429 Bergisch Gladbach (DE)
(72) Inventor: KOCH, Andreas, 77550 MOISSY-CRAMAYEL (FR); FABER, Marc, 77550 MOISSY-CRAMAYEL (FR)
(74) Representative: Cabinet Camus Lebkiri

(56) References cited:
- US-A1- 2011 107 132
- US-A1- 2012 278 579
- US-B1- 10 338 845

## Description

### BACKGROUND OF THE INVENTION

The present invention relates to the protection of data stored in electronic systems, especially sensitive data.

A way to protect sensitive data managed by electronic systems relies on the use of a Trusted Platform Module (TPM). A TPM is a hardware device, mostly a microcontroller, designed to secure other hardware and data based on cryptographic keys integrated in and managed by said TPM. In other words, a TPM is adapted to store or encrypt the data, being it stored afterwards on said TPM or not. Documents US 2011/107132, US 10338845 and US 2012/278579 form part of the technological background.

Accessing the data stored on the TPM or encrypted by the TPM requires to know the adequate password. This password is defined by the operator, i.e., the owner and/or the user of the TPM. This means that the sensitive information stored on/encrypted by the TPM is protected by the encryption of the data and can only be accessed if the correct password is provided, as long as said data is available.

One of the drawbacks of using a TPM is that a TPM has limited storage capacities for storing data, typically between 16 and 256 Kilobytes (KB). Consequently, only data whose size does not exceed the available TPM memory size can be stored on said TPM.

Furthermore, even though a TPM is designed to be tamper-resistant and malware-resistant, it is not tamper-proof nor malware-proof. In particular, there is no evidence that a given TPM will not be tamper-able or hackable with upcoming technologies.

There is thus a need for systems that can store a large volume of data, and that effectively protect this data.

### SUMMARY OF THE INVENTION

The invention relates to a method, implemented by a processor of a system, for securely storing data in a memory of the system, the system being connected to a main power unit, the system comprising a subsidiary autonomous power unit, wherein when the system is powered by the main power unit, the processor and the memory are powered by the main power unit, and when the system is not powered by main power unit, the processor and the memory are powered by the subsidiary autonomous power unit, the method comprising:
- Obtaining the data;
- Obtaining a data storage duration indicating a maximum duration following a shutdown of the main power unit after which the data must be erased from the memory;
- Storing the data in the memory;
- Detecting a shutdown of the main power unit;
- Erasing the data from the memory after the data storage duration following the detection of the shutdown.

By "data" is meant any kind of data of any format. For example, it can be any data comprised in an electronic system that needs to be permanently protected from unauthorized access, also called sensitive data. Examples of such sensitive data comprise: one or more keys for any type of encryption, one or more passwords (e.g., Trusted Platform Module (TPM) passwords) or other access information, environmental data of the system (e.g., one or more signals acquired via any sensor, such as a temperature, a vibration, an acceleration, a speed, etc.), a position of the system, a time measured by an hour meter, one or more other log files of the system, etc. For example, these data are obtained during the operating of an aircraft, such as a plane or a helicopter.

By "subsidiary autonomous power unit" is meant a device that is independent of the main power unit and for powering the processor. The main power unit is substituted to the subsidiary autonomous power unit when said main power unit is shut down. The subsidiary autonomous power unit has a limited power reserve, which means it is only able to supply the processor in power for a limited duration. This power supply autonomy, also called "remaining power autonomy", depends on the type of power supply of this subsidiary autonomous power unit. For example, the subsidiary autonomous power unit can be a battery, a capacitor, or any other device able to store and supply power.

By "storing" is meant the writing of the data on the memory via any writing mechanism.

By "shutdown" is meant a power off of the system, which is then no longer power supplied by the main power unit. This shutdown can be, for example, the consequence of a disconnection of the main power unit from the system, being it intentional or accidental. It can also be the consequence of a malfunction and/or a failure of the main power unit, or any other cause resulting in stopping the powering of the system.

By "erasing" is meant the permanent deletion of the data from a memory, here the memory, via any permanent deletion mechanism. The data cannot, therefore, be retrieved by any means after the erasing.

Thanks to the invention, the data stored on the memory is permanently protected from unauthorized access after the data storage duration. This approach thus prevents the data to be accessed at a later time via an upcoming technology. The invention, therefore, protects the data by irretrievable erasure instead of encryption, the former being a strongest protection against unauthorized access.

The data remains, however, accessible after the shutdown of the system, during the data storage duration. The accessibility of the data within this data storage duration allows, for example, an operator and/or an owner of the system and/or another system to retrieve the data from the memory, for instance for analysis and/or history purposes. It is noted that the data can be encrypted via any encryption mechanism until its erasure.

The data storage duration acts as a maximum duration during which the data is stored on the memory. After this data storage duration, the processor carries out the erasure of the data from the memory.

The accessibility during the data storage duration and the permanent protection are allowed thanks to the processor being supplied in power by the subsidiary autonomous power unit. In other words, the subsidiary autonomous power unit powers the processor at least until the end of the erasing of the data.

Moreover, the memory can be any type of memory with any storage space size, therefore not limiting the method to the use of a TPM.

In one embodiment, the data storage duration is a predefined duration regardless of the data.

Thanks to this embodiment, the data storage duration is independent of the data. In other words, the data storage duration is the same for every piece of data stored on the memory.

In one embodiment, when the data storage duration is not obtained, the data storage duration is equal to a reference duration.

By "reference duration" is meant a duration to be used instead of the data storage duration in order to indicate the maximum duration after which the data must be erased from the memory, following the shutdown. The reference duration is, for example, already predefined, i.e., defined automatically by any means or manually set by an operator, and stored in a of the processor.

Thanks to this embodiment, a duration at the end of which the erasure is carried out is available, even if the data storage duration is not obtained.

In one embodiment, the data storage duration is associated with the data and obtained with the data.

By "associated with data" is meant that the data storage duration relates to its associated data and not to other data, even though different data can have a same data storage duration length.

Thanks to this embodiment, the data storage duration is dependent on the data, which means that the data storage duration can be different for each data. Each data is thus stored for a different storing duration on the memory before being erased from it.

In one embodiment, the method further comprises:
- Determining a remaining power autonomy of the subsidiary autonomous power unit;
- When the data storage duration is equal to or longer than the remaining power autonomy of the subsidiary autonomous power unit, replacing the data storage duration by a duration shorter than the remaining power autonomy of the subsidiary autonomous power unit.

By "remaining power autonomy" is meant a duration during which the subsidiary autonomous power unit is able to supply in power the processor, when the shutdown occurs, until exhaustion of its power reserve. The remaining power autonomy is determined by any known technique, preferably carried out by the microcontroller.

Thanks to this embodiment, when the data storage duration is not shorter than the remaining power autonomy, i.e., when the data storage duration is longer than the remaining power autonomy, the method automatically modifies the data storage duration so that it becomes shorter than the remaining power autonomy. This ensures that, regardless of the remaining power autonomy, the erasure occurs before it, meaning that there is always a sufficient remaining power autonomy to complete the erasure.

In one embodiment, when the data storage duration is equal to or longer than the remaining power autonomy of the subsidiary autonomous power unit, the data storage duration is replaced by a duration equal to *Nt -* 1, where *Nt* is a number of clock cycles of a clock of the processor, corresponding to the remaining power autonomy.

This embodiment ensures that the erasure of the data from the memory occurs before the exhaustion of the subsidiary autonomous power unit.

In one embodiment, the memory is a volatile memory and the method further comprises:
- Disconnecting the processor from the subsidiary autonomous power unit, after erasing the data.

By this disconnection, any remaining data stored on the volatile memory is ensured to be deleted, for instance when the data erasure is faulty and some pieces of data accidentally remain.

In one embodiment, the method further comprises, before expiration of the data storage duration:
- Receiving a command for erasing the data from the memory;
- Upon reception of the command, erasing the data from the memory.

Thanks to this embodiment, an operator of the system and/or another system can trigger manually or automatically the erasure of the data from the memory before the end of the data storage duration. For instance, this mechanism can advantageously be triggered in case of an emergency, such as upon release of an ejection seat of the aircraft.

Another aspect of the invention relates to a microcontroller for erasing data stored in a memory connected to the microcontroller, the microcontroller being configured for carrying out the steps of the method according to the invention.

Yet another aspect of the invention relates to a system comprising a central processing unit, a subsidiary autonomous power unit, a microcontroller according to the previous aspect and a memory, the central processing unit being connected to a main power unit, the central processing unit being also connected to the microcontroller, the data being provided by the central processing unit, the memory being connected to the microcontroller, the microcontroller being connected to the main power unit and to the subsidiary autonomous power unit.

In one embodiment, the system further comprises an analogic to digital converter between the main power unit and the microcontroller, and comprises a switch between the subsidiary autonomous power unit and the microcontroller.

An aspect of the invention relates to a computer program product comprising a computer readable medium, having thereon a computer program comprising program instructions. The computer program is loadable into a data-processing unit and adapted to cause the data-processing unit to carry out the method described above when the computer program is run by the data-processing unit.

Other features and advantages of the method and apparatus disclosed herein will become apparent from the following description of non-limiting embodiments, with reference to the appended drawings.

### BRIEF DESCRIPTION OF THE DRAWINGS

The present invention is illustrated by way of example, and not by way of limitation, in the figures of the accompanying drawings, in which like reference numerals refer to similar elements and in which:
- Figure 1 is a flow chart describing a possible embodiment of the present invention;
- Figure 2 is a possible embodiment for a device that enables the present invention;
- Figure 3 is another possible embodiment for a device that enables the present invention.

### DETAILED DESCRIPTION

A Trusted Platform Module (TPM) is a common device used for data protection. However, even though it is tamper-resistant and hack-resistant, it is not tamper-proof nor hack-proof. Furthermore, the limited storage space on a TPM does not allow to store a large volume of data on its memory.

The described approach teaches a way to circumvent the disadvantages of a TPM by using a processor configured to erase the data that is stored on a memory, which can be different from a TPM, after a data storage duration, when a shutdown of the power supply of the processor is detected.

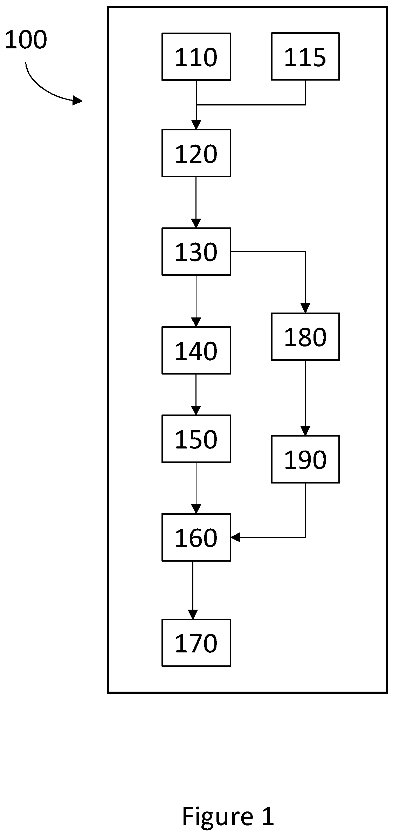

To this end, an aspect of the invention concerns a method 100, illustrated in reference to figure 1, for securely storing a data in a memory, especially a volatile memory. It is noted that it is also possible to use a non-volatile memory. However, it is preferable to use a volatile memory for security reasons. Indeed, with a non-volatile memory, certain information can remain in memory in the case of any malfunction of the erasure.

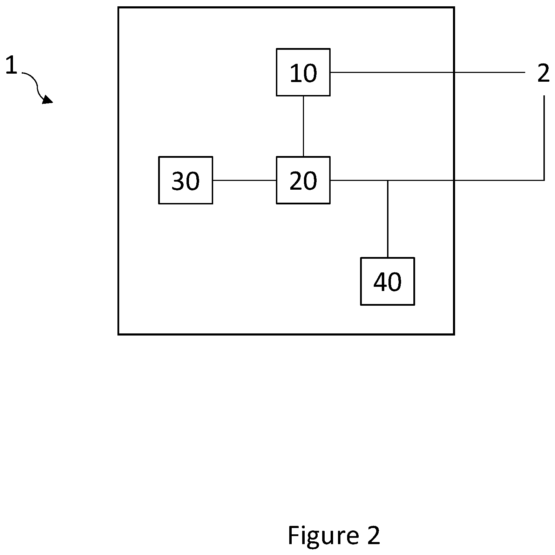

This method is implemented by a processor 20 of a system 1, illustrated in reference to figure 2, especially an electronic system.

The processor 20 is then configured to carry out the steps of the method 100. For this purpose, the processor 20 comprises instructions written in one of its memories that, when implemented by the processor 20, cause the processor 20 to carry out the steps of the method 100.

The processor 20 is, for example, a microcontroller. Preferably, the processor is a low-power microcontroller, i.e., a microcontroller that needs only a low power to operate.

The system also comprises the memory 30. In the presented embodiment, the memory 30 is a volatile memory 30. It is however noted that the memory 30 can indifferently be a non-volatile memory 30, without modifying the core functioning of the described method 100. The memory 30 can be connected to the processor 20 or is comprised within said processor 20.

The system 1 is connected to a main power unit 2 that supplies the system 1 in power. The processor 20 and the memory 30 are supplied in power by this main power unit 2 when the system 1 is powered by the main power unit 2.

The system 1 comprises a subsidiary autonomous power unit 40. This subsidiary autonomous power unit 40 powers the processor 20 and the memory 30 when the system is not powered by the main power unit 2. This means that the subsidiary autonomous power unit 40 is connected to the processor 20. The memory 30 is powered via the processor 20.

By "connected" is meant that there exist a material or non-material link between the two components that are connected, in order to transfer data and/or power through this connection. The connection can, therefore, be any wired or non-wired connection.

Referring back to the method 100, this method 100 comprises a step 110 of obtaining data to be stored on the memory 30.

The data can indifferently be determined and/or originate from any source and be obtained by any way, without changing the functioning of the described method 100. As such, the data can be obtained by any means. For example, the data can be provided by a central processing unit 10 of the system 1, connected to the processor 20. The central processing unit 10 can also be connected to the main power unit 2.

The central processing unit 10 is, for example, the computer of the system 1 that orchestrates and/or monitors other modules of said system 1. The central processing unit 10 is, for example, connected to the processor 20 via a variable interface.

In this case, the data can be generated directly by the central processing unit 10, through an application running on the central processing unit 10 or by any other processing unit, for example a sensor, a dedicated processing unit such as a Field-Programmable Gate Array (FPGA) card, a Graphics Processing Unit (GPU), another microcontroller, or any another electric circuit able to produce a data to be stored.

As an exemplary application, the system is the computer of an aircraft and the central processing unit is the main processor, or microprocessor, of said computer.

The method 100 also comprises a step 115 of obtaining a data storage duration.

The data storage duration indicates how long the data has to be stored on the memory 30, after a shutdown of the main power unit 2, until its erasure from the memory 30. The data storage duration thus indicates a maximum duration following said shutdown of the main power unit 2 after which the data must be erased from the memory 30.

The length of this data storage duration depends on the considered application. This duration can last for a few seconds, for example 10 to 30 seconds, up to several hours, such as 2 to 5 hours.

For example, during a Flight Test Instrumentation (FTI) campaign, there can be situations where the pilot of the aircraft has to reset the whole under testing **FTI** system, such as when a malfunction happens. In this context, the sensitive data should remain stored on the memory 30 for a sufficiently long duration (e.g., at least 2 minutes, such as 5 minutes or even 10 minutes) in order to let the system properly reboot and pursue the tests without losing this sensitive data during this power off/on period (as the data can still be accessible during this period).

Other examples include data storage duration lasting at least 1 hour, for example 2 hours or even 5 hours.

The data storage duration can indifferently be determined and/or originate from any source and be obtained by any way, without changing the functioning of the described method 100. As such, this data storage duration can be obtained by any means, be automatic or manual. For example, the data can be provided by the central processing unit 10 of the system 1.

In this case, the data storage duration can be generated directly by the central processing unit 10, through an application running on the central processing unit 10 or by the other processing unit that produced the data.

The method 100 also comprises a step 120 of storing the data in the memory 30. This means that the processor 20 writes this data on the memory 30 upon reception of said data. The writing of the data can be carried out via any known technique.

The method 100 also comprises a step 130 of detecting a shutdown of the main power unit. This shutdown can indifferently be the result of any cause leading to said shutdown, being it intentional or accidental.

The shutdown detection can be carried out by any known technique, either directly by the processor 20 itself, via a General-Purpose Input/Output (GPIO) pin of the microcontroller 20 that is connected to the main power unit 2, or using an intermediate module.

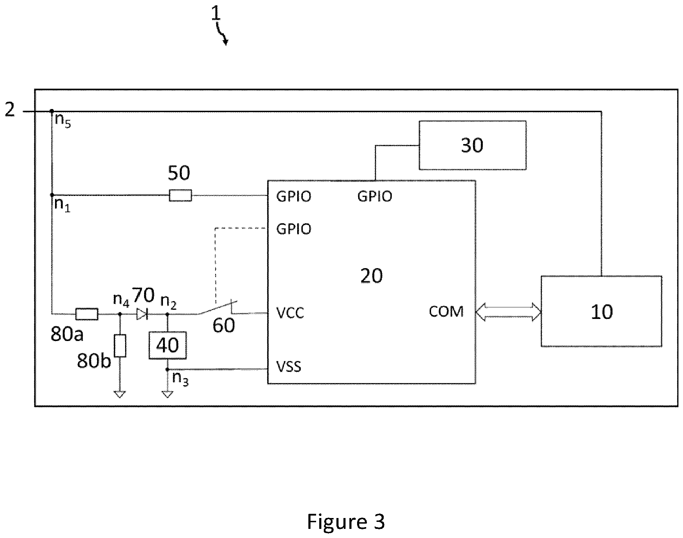

For example, in an embodiment, in reference to figure 3, the shutdown is detected via an analogic to digital converter 50 (also called A/D converter 50), connected between the processor 20 and the main power unit 2. Especially, the A/D converter 50 can be connected to a GPIO pin of the microcontroller 20.

The A/D converter 50 uses any known technique from the art to allow the shutdown detection.

When the shutdown occurs, the processor 20 and the memory 30 are powered by the subsidiary autonomous power unit 40. This also means that the central processing unit 10, if any, is not powered and is thus not working. The method 100 also comprises a step 160 of erasing the data that is stored in the memory 30. The data is then erased from the memory 30.

Any known technique can be used to carry out this erasure. Preferably, the memory segments of the memory 30 relating to the data are overwritten several times.

The erasure is carried out after the data storage duration, following the detection of the shutdown. The data, therefore, still exists during this data storage duration but no longer after the erasure. The erasure is then triggered after the data storage duration.

The erasure is carried out before exhaustion of the subsidiary autonomous power unit 40.

By "after a duration" is meant that the considered action, event and/or step occurs at the end of the said duration, be it at the first moment following said duration or after a few moments following said duration.

By a duration "following" an action, event or step is meant the said duration countdown starts at the first moment succeeding the occurrence of said action, event and/or step.

The time lapsing after the shutdown is quantified by the processor 20, in order to activate the erasure when the end of the data storage duration is reached. For instance, the time lapsing is quantified as a number of clock cycles of a clock of the processor 20, such as the clock of the processor 20 itself. In this case, the time count for the data storage duration starts at the very first clock cycle immediately succeeding the shutdown.

In some embodiments, the data storage duration is independent of the data that is stored on the memory 30. In other words, the data storage duration is a duration that is predefined regardless of the data.

In some embodiments, when the data storage duration is not obtained at step 115, regardless of the cause, the data storage duration is set to be equal to a reference duration. The reference duration is, for example, already stored in a memory of the processor 20, for example in the memory 30, so that it is still available to the processor 20 even after the shutdown. The reference duration can be the same or be different for each piece of data stored on the memory 30.

In this particular embodiment, the data can be not accessible during the storage duration.

In some variants, the reference duration is equal to a remaining power autonomy. In this case, the step 115 of obtaining the data storage duration comprises determining the remaining power autonomy of the subsidiary autonomous power unit 40. The data storage duration is then equal to the reference duration and the reference duration is equal to the remaining power autonomy.

The remaining power autonomy can be determined at any moment after the detection of the shutdown. For example, it can be determined at the moment the shutdown is detected, such as at the very first clock cycle immediately succeeding the shutdown, of a clock of the processor 20, such as the clock of the processor 20 itself. In this case, the estimated remaining power autonomy is counted starting from the very first clock cycle immediately succeeding the shutdown.

In some embodiments, the data storage duration is also associated with the obtained data, which means that the data storage duration can be different for different pieces of data.

In these embodiments, the data storage duration can be obtained along with the data, for example at step 110, or at least before the shutdown occurs.

The association of the data storage duration with its corresponding data can be determined by the other processing unit that generated the data or by the central processing unit 10 or by any other processing module able to carry out said association. For example, the association can occur after the data storage duration has been predefined or along its predefinition.

In some embodiments, the method 100 also comprises a step of determining 140 the remaining power autonomy of the subsidiary autonomous power unit 40. The remaining power autonomy can be determined at any moment after the detection of the shutdown. For example, it can be determined at the moment the shutdown is detected, such as at the very first clock cycle immediately succeeding the shutdown, of a clock of the processor 20, such as the clock of the processor 20 itself. In this case, the estimated remaining power autonomy is counted starting from the very first clock cycle immediately succeeding the shutdown.

When the data storage duration is shorter than the remaining power autonomy of the subsidiary autonomous power unit 40, it is ensured that the erasure occurs before the subsidiary autonomous power unit 40 runs out of power.

However, when the data storage duration is equal to or longer than remaining power autonomy of the subsidiary autonomous power unit 40, the method 100 also comprises a step 150 of replacing the data storage duration by a duration shorter than the remaining power autonomy of the subsidiary autonomous power unit 40. The data storage duration can be replaced by any duration shorter than the remaining power duration.

In such embodiments, the erasing step 160 of the method 100 is carried out when this determined data storage duration ends, i.e., after the replaced data storage duration has ended, following the detection of the shutdown.

In some embodiments, compatible with the previous embodiments, the data storage duration is defined as a number of cycles of the clock of the processor 20. The data storage duration is then equal to a number of clock cycles, as regards said clock, which preferably is an integer.

In some embodiments, when the data storage duration is equal to or longer than the remaining power autonomy, the data storage duration is replaced by a duration equal *Nt - 1,* where *Nt* is the total number of clock cycles comprised in the remaining power autonomy. In other words, *Nt* is the total number of clock cycles corresponding to, i.e., that are comprised within, the remaining power autonomy. The erasure of the data then occurs during the last cycle of the remaining power autonomy, i.e., the *Nt*^{th} cycle of said remaining power autonomy.

In some variants, when the data storage duration is equal to or longer than the remaining power autonomy, the data storage duration is replaced by a duration equal *Nt - X,* where *X* is a number of clock cycles comprised between 1 and $\frac{Nt}{2}$*,* the latter being rounded to the closest integer. The number *X* can be set to ensure that the erasure of the data from the memory 30 is completely carried out. In other words, *X* is defined so that the duration between the end of the data storage duration and the end of the remaining power autonomy is long enough to completely carry out the erasure of step 160. In other words, *X* is equal or longer than the number of clock cycles required to completely carry out the erasure.

In some embodiments, compatible with the previous embodiments, the method 100 also comprises a step 170 of disconnecting the processor 20 from the subsidiary autonomous power unit. This disconnection is, for example, in reference to figure 3, carried out via an interrupter 60, which can be any kind of interrupter, for example a transistor controlled by the processor 20.

This disconnection occurs after completion of the erasure of the data and before the end of the remaining power autonomy.

In some variants, *X* is equal to the number of clock cycles required to completely carry out the erasure and to complete the disconnection of the processor 20.

In some embodiments, compatible with the previous embodiments, the method 100 also comprises a step 180 of receiving a command to trigger the erasure. This reception and the triggered erasing mechanism can thus be carried out before the end of the data storage duration, i.e., before the expiration of said data storage duration.

In this embodiment, the step 160 of erasing the data from the memory 30 is carried out upon receiving the command, without waiting until the end of the data storage duration.

The command can be received from any source, by any means, and contains any information that can be interpreted by the processor 20 so that it triggers the erasing mechanism of step 160. For example, this command can be generated manually by the operator, via a user interface connected to the processor 20 and/or via a keyboard, or automatically, via an application running on the processor 20 or on any other processing module connected to the processor 20, and powered by the subsidiary autonomous power unit 40. In variants of these embodiments, the method 100 comprises a step 190 of verifying the authenticity of the received command, for example by verifying the identity of the emitter, be it a person or an electronic module. This authenticity verification can be carried out by any known technique from the art.

In some embodiments, compatible with the previous embodiments, the data stored on the memory 30 can be encrypted by any known technique, including by using a TPM. This allows for protecting the data before the erasure.

In some embodiments, compatible with the previous embodiments, the communication to and/or configuration of the processor 20 are only achievable via the central processing unit 10.

In some embodiments, compatible with the previous embodiments, the processor 20 is in sleep-mode during the data storage duration and is set out, via any known technique (for example, via an internal timer/interrupt mechanism), of its sleep-mode when the erasure has to be carried out, i.e., after the data storage duration.

In some embodiments, compatible with the previous embodiments, in reference to figure 3, the system 1 also comprises a voltage divider (here comprising at least two resistances) between the subsidiary autonomous power unit and the main power unit, in order to adapt the voltage supplied to the processor 20 and/or to the subsidiary autonomous power unit 40.

In some embodiments, compatible with the previous embodiments, in reference to figure 3, the system 1 also comprises a diode 70 between the main power unit and a node connecting the processor 20 and to the subsidiary autonomous power unit 40. The diode 70 comprises a cathode that is connected to the node connecting to the processor 20 and to the subsidiary autonomous power unit 40. The diode 70 also comprises an anode connected to the main power unit 2. The diode 70 is used in order to prevent current leaks from the subsidiary autonomous power unit 40 towards the main power unit 2 or the voltage divider, if any.

In a particular embodiment, in reference to figure 3, the processor 20 is a microcontroller 20. The microcontroller 20 comprises several GPIO pins, a Voltage Common Collector (VCC) pin, a Voltage Source Supply (VSS) pin, and a Communication (COM) pin. The COM pin is connected to the central processing unit 10 via the variable interface.

One of the GPIO pin is connected to a first node n₁, said first node n₁ being connected to the main power unit 2. The connection to the main power unit 1 via the first node n₁ allows the microcontroller 20 to detect the shutdown.

If any, the A/D converter 50 is connected between the first node n₁ and the GPIO pin of the microcontroller that is connected to said first node n₁.

The VCC pin is connected to a second node n₂ and the VSS pin is connected to a third node n₃.

If any, the interrupter 60 is connected between the second node n₂ and the VCC pin. The interrupter can also be connected to a GPIO pin of the microcontroller for disconnecting, at the step 170, the microcontroller 20 from the subsidiary autonomous power unit 40.

The subsidiary autonomous power unit 40 is connected between the second node n₂ and the third node n₃, in parallel to the VCC and VSS pins.

The third node n₃ is also connected to the ground.

The second node n₂ is connected to a fourth node n₄, and said fourth node n₄ is connected to the first node n₁.

If any, the diode 70 is connected between the second node n₂ and the fourth node n₄ so that its cathode connects the diode 70 to the second node n₂ and its anode connects the diode 70 to the fourth node n₄.

The fourth node n₄ is also connected to the ground.

If any, the voltage divider can comprise a first resistance 80a and a second resistance 80b. The first resistance 80a is connected between the fourth node n₄ and the first node n₁, and the second resistance 80b is connected between the fourth node n₄ and the ground.

The first node n₁ is connected to the main power unit 2 via a fifth node n₅. The central processing unit 10 is also connected to the main power unit 2 via the fifth node n₅.

The memory 30, here a volatile memory, is connected to a GPIO pin of the microcontroller 20, preferably different from the GPIO pin connected to the first node n₁ and different from the GPIO pin connected to the interrupter 60. In this embodiment, the system 1 comprises the central processing unit 10, the microcontroller 20, the memory 30, the subsidiary autonomous power unit 40, and, if any, the interrupter 60, the A/D converter 50, the diode 70, the first resistance 80a, the second resistance 80b, the first node n₁, the second node n₂, the third node n₃, the fourth node n₄ and the fifth node n₅.

A person skilled in the art will readily appreciate that various parameters disclosed in the description may be modified and that various embodiments disclosed may be combined without departing from the scope of the invention.

## Claims

1. Method (100), implemented by a processor (20) of a system (1), for securely storing data in a memory (30) of the system (1), the system (1) being connected to a main power unit (2), the system (1) comprising a subsidiary autonomous power unit (40), wherein when the system (1) is powered by the main power unit (2), the processor (20) and the memory (30) are powered by the main power unit (2), and when the system (1) is not powered by main power unit (2), the processor (20) and the memory (30) are powered by the subsidiary autonomous power unit (40), the method (100) comprising:
- Obtaining (110) the data;
- Obtaining (115) a data storage duration indicating a maximum duration following a shutdown of the main power unit (2) after which the data must be erased from the memory (30);
- Storing (120) the data in the memory (30);
- Detecting (130) a shutdown of the main power unit (2);
- Determining (140) a remaining power autonomy of the subsidiary autonomous power unit (40);
- When the data storage duration is equal to or longer than the remaining power autonomy of the subsidiary autonomous power unit (40), replacing (150) the data storage duration by a duration shorter than the remaining power autonomy of the subsidiary autonomous power unit (40);
- Erasing (160) the data from the memory (30) after the data storage duration following the detection of the shutdown.

2. Method (100) according to claim 1, wherein the data storage duration is a predefined duration regardless of the data.

3. Method (100) according to claim 1, wherein the data storage duration is associated with the data and obtained with the data.

4. Method (100) according any one of the preceding claims, wherein when the data storage duration is equal to or longer than the remaining power autonomy of the subsidiary autonomous power unit (40), the data storage duration is replaced by a duration equal to *Nt -* 1, where *Nt* is a number of clock cycles of a clock of the processor (20), corresponding to the remaining power autonomy.

5. Method (100) according to any one of the preceding claims, wherein the memory (30) is a volatile memory, the method (100) further comprising:
- Disconnecting (170) the processor (20) from the subsidiary autonomous power unit (40), after erasing the data.

6. Method (100) according to any one of the preceding claims, further comprising, before expiration of the data storage duration:
- Receiving (180) a command for erasing the data from the memory (30);
- Upon reception of the command, erasing (160) the data from the memory (30).

7. Microcontroller (20) for erasing data stored in a memory (30) connected to the microcontroller (20), the microcontroller (20) being configured for carrying out the steps of the method (100) according to any of the preceding claims.

8. System (1) comprising a central processing unit (10), a subsidiary autonomous power unit (40), a microcontroller (20) according to claim 7 and a memory (30), the central processing unit (10) being connected to a main power unit (2), the central processing unit (10) being also connected to the microcontroller (20), the data being provided by the central processing unit (10), the memory (30) being connected to the microcontroller (20), the microcontroller (20) being connected to the main power unit (2) and to the subsidiary autonomous power unit (40).

9. System (1) according to claim 8, further comprising an analogic to digital converter between the main power unit (2) and the microcontroller (20), and comprising a switch between the subsidiary autonomous power unit (40) and the microcontroller (20).

## Patentansprüche

1. Verfahren (100), das von einem Prozessor (20) eines Systems (1) ausgeführt wird, zum sicheren Speichern von Daten in einem Speicher (30) des Systems (1), wobei das System (1) mit einer Hauptstromversorgungseinheit (2) verbunden ist und eine autonome Hilfsstromversorgungseinheit (40) umfasst, wobei, wenn das System (1) von der Hauptstromversorgungseinheit (2) mit Strom versorgt wird, der Prozessor (20) und der Speicher (30) von der Hauptstromversorgungseinheit (2) mit Strom versorgt werden, und wenn das System (1) nicht von der Hauptstromversorgungseinheit (2) mit Strom versorgt wird, der Prozessor (20) und der Speicher (30) von der autonomen Hilfsstromversorgungseinheit (40) mit Strom versorgt werden, wobei das Verfahren (100) umfasst:
- das Erhalten (110) der Daten;
- das Erhalten (115) einer Datenspeicherdauer, die eine maximale Zeitspanne nach einem Ausfall der Hauptstromversorgungseinheit (2) angibt, nach deren Ablauf die Daten aus dem Speicher (30) gelöscht werden müssen;
- das Speichern (120) der Daten im Speicher (30);
- das Erkennen (130) eines Ausfalls der Hauptstromversorgungseinheit (2);
- das Ermitteln (140) einer verbleibenden Betriebsdauer der autonomen Hilfsstromversorgungseinheit (40);
- wenn die Datenspeicherdauer gleich oder länger ist als die verbleibende Betriebsdauer der autonomen Hilfsstromversorgungseinheit (40), das Ersetzen (150) der Datenspeicherdauer durch eine Dauer, die kürzer ist als die verbleibende Betriebsdauer der autonomen Hilfsstromversorgungseinheit (40);
- das Löschen (160) der Daten aus dem Speicher (30) nach Ablauf der Datenspeicherdauer im Anschluss an die Erkennung des Ausfalls.

2. Verfahren (100) nach Anspruch 1, bei dem die Datenspeicherdauer eine vordefinierte, von den Daten unabhängige Dauer ist.

3. Verfahren (100) nach Anspruch 1, bei dem die Datenspeicherdauer den Daten zugeordnet ist und zusammen mit den Daten ermittelt wird.

4. Verfahren (100) nach einem der vorstehenden Ansprüche,
bei dem, wenn die Datenspeicherdauer gleich oder länger als die verbleibende Betriebsdauer der autonomen Hilfsstromversorgungseinheit (40) ist, die Datenspeicherdauer durch eine Dauer ersetzt wird, die gleich *Nt -* 1 ist, wobei *Nt* eine Anzahl von Taktzyklen eines Prozessortakts (20) ist, die der verbleibenden Betriebsdauer entspricht.

5. Verfahren (100) nach einem der vorstehenden Ansprüche, bei dem der Speicher (30) ein flüchtiger Speicher ist, wobei das Verfahren (100) ferner umfasst:
- das Trennen (170) des Prozessors (20) von der autonomen Hilfsstromversorgungseinheit (40) nach dem Löschen der Daten.

6. Verfahren (100) nach einem der vorstehenden Ansprüche, das ferner vor Ablauf der Datenspeicherungsdauer umfasst:
- das Empfangen (180) eines Befehls zum Löschen der Daten aus dem Speicher (30);
- beim Empfang des Befehls das Löschen (160) der Daten aus dem Speicher (30).

7. Mikrocontroller (20) zum Löschen von Daten, die in einem mit dem Mikrocontroller (20) verbundenen Speicher (30) gespeichert sind, wobei der Mikrocontroller (20) so konfiguriert ist, dass er die Schritte des Verfahrens (100) gemäß einem der vorstehenden Ansprüche ausführt.

8. System (1) mit einer Zentraleinheit (10), einer autonomen Hilfsstromversorgungseinheit (40), einem Mikrocontroller (20) nach Anspruch 7 und einem Speicher (30), wobei die Zentraleinheit (10) mit einer Hauptstromversorgungseinheit (2) sowie mit dem Mikrocontroller (20) verbunden ist und die Daten von der Zentraleinheit (10) bereitgestellt werden, wobei der Speicher (30) mit dem Mikrocontroller (20) verbunden ist und der Mikrocontroller (20) mit der Hauptstromversorgungseinheit (2) und der autonomen Hilfsstromversorgungseinheit (40) verbunden ist.

9. System (1) nach Anspruch 8, das ferner einen Analog-Digital-Wandler zwischen der Hauptstromversorgungseinheit (2) und dem Mikrocontroller (20) sowie einen Umschalter zwischen der autonomen Hilfsstromversorgungseinheit (40) und dem Mikrocontroller (20) umfasst.

## Revendications

1. Procédé (100), mis en œuvre par un processeur (20) d'un système (1), de stockage de manière sécurisée des données dans une mémoire (30) du système (1), le système (1) étant connecté à une unité d'alimentation principale (2), le système (1) comprenant une unité d'alimentation autonome auxiliaire (40), dans lequel, lorsque le système (1) est alimenté par l'unité d'alimentation principale (2), le processeur (20) et la mémoire (30) sont alimentés par l'unité d'alimentation principale (2), et lorsque le système (1) n'est pas alimenté par l'unité d'alimentation principale (2), le processeur (20) et la mémoire (30) sont alimentés par l'unité d'alimentation autonome auxiliaire (40), le procédé (100) comprenant :
- Obtenir (110) les données ;
- Obtenir (115) une durée de stockage des données indiquant une durée maximale suivant un arrêt de l'unité d'alimentation principale (2), au terme de laquelle les données doivent être effacées de la mémoire (30) ;
- Stocker (120) les données dans la mémoire (30) ;
- Détecter (130) un arrêt de l'unité d'alimentation principale (2) ;
- Déterminer (140) une autonomie restante de l'unité d'alimentation autonome auxiliaire (40) ;
- Lorsque la durée de conservation des données est égale ou supérieure à l'autonomie restante de l'unité d'alimentation autonome auxiliaire (40), remplacer (150) la durée de stockage des données par une durée inférieure à l'autonomie restante de l'unité d'alimentation autonome auxiliaire (40) ;
- Effacer (160) les données de la mémoire (30) à l'issue de la durée de stockage des données suivant la détection de l'arrêt.

2. Procédé (100) selon la revendication 1, dans lequel la durée de stockage des données est une durée prédéfinie, indépendamment des données.

3. Procédé (100) selon la revendication 1, dans lequel la durée de stockage des données est associée aux données et obtenue avec les données.

4. Procédé (100) selon l'une quelconque des revendications précédentes, dans lequel, lorsque la durée de stockage des données est égale ou supérieure à l'autonomie restante de l'unité d'alimentation autonome auxiliaire (40), la durée de stockage des données est remplacée par une durée égale à *Nt -* 1, où *Nt* est un nombre de cycles d'horloge d'une horloge du processeur (20), correspondant à l'autonomie restante.

5. Procédé (100) selon l'une quelconque des revendications précédentes, dans lequel la mémoire (30) est une mémoire volatile, le procédé (100) comprenant en outre :
- Déconnecter (170) le processeur (20) de l'unité d'alimentation autonome auxiliaire (40), après effacement des données.

6. Procédé (100) selon l'une quelconque des revendications précédentes, comprenant en outre, avant l'expiration de la durée de stockage des données :
- Recevoir (180) une commande d'effacement des données de la mémoire (30) ;
- A réception de la commande, effacer (160) les données de la mémoire (30).

7. Microcontrôleur (20) d'effacement de données stockées dans une mémoire (30) connectée au microcontrôleur (20), le microcontrôleur (20) étant configuré pour exécuter les étapes du procédé (100) selon l'une quelconque des revendications précédentes.

8. Système (1) comprenant une unité centrale de traitement (10), une unité d'alimentation autonome auxiliaire (40), un microcontrôleur (20) selon la revendication 7 et une mémoire (30), l'unité centrale de traitement (10) étant reliée à une unité d'alimentation principale (2), l'unité centrale de traitement (10) étant également reliée au microcontrôleur (20), les données étant fournies par l'unité centrale de traitement (10), la mémoire (30) étant reliée au microcontrôleur (20), le microcontrôleur (20) étant relié à l'unité d'alimentation principale (2) et à l'unité d'alimentation autonome auxiliaire (40).

9. Système (1) selon la revendication 8, comprenant en outre un convertisseur analogique-numérique entre l'unité d'alimentation principale (2) et le microcontrôleur (20), et comprenant un commutateur entre l'unité d'alimentation autonome auxiliaire (40) et le microcontrôleur (20).
